# EUROPÄISCHE PATENTANMELDUNG

(11) **EP 4 249 174 A1**
(43) Veröffentlichungstag der Anmeldung: **27.09.2023**
(21) Anmeldenummer: 22163708.5
(22) Anmeldetag: 23.03.2022
(51) Int. Cl.: B25J 9/00, B25J 9/06, B25J 11/00, B25J 15/04

(54) **VERFAHREN UND FERTIGUNGSANLAGE ZU EINER AUTONOMEN BEARBEITUNG EINES WERKSTÜCKS**

(71) Anmelder: ARRTSM GMBH, 72135 Dettenhausen (DE)
(72) Erfinder: Gauli, Yudhisthir, 72135 Dettenhausen (DE)
(74) Vertreter: Witte, Weller & Partner Patentanwälte mbB

(57) **Zusammenfassung**

Die Erfindung schlägt eine autonome Fertigungsanlage (1) mit einem Handhabungs- und Bearbeitungsroboter (3) vor, der zwischen zwei einander gegenüber angeordneten Bearbeitungsstationen (8, 9) angeordnet ist und der Werkstücke (2) von einem Zuförderer (22) zu einer der Bearbeitungsstationen (8) verbringt, bearbeitet, zu einer Werkstückwendestation (20) verbringt, wendet, zu der anderen Bearbeitungsstation (9) verbringt, weiter bearbeitet und nach der Bearbeitung in der zweiten Bearbeitungsstation (9) auf einen Abförderer (23) legt.

## Beschreibung

Die Erfindung betrifft ein Verfahren und eine Fertigungsanlage zu einer autonomen Bearbeitung eines Werkstücks. Es ist insbesondere an eine spanende Bearbeitung mit geometrisch bestimmter Schneide wie Fräsen, Bohren und Sägen und mit geometrisch unbestimmter Schneide wie Schleifen gedacht. Andere Bearbeitungsmöglichkeiten sind ein Umformen wie Biegen und ein Fügen wie Schweißen, Löten und Kleben.

Aufgabe der Erfindung ist, ein Verfahren und eine Fertigungsanlage vorzuschlagen, die eine autonome Bearbeitung gleicher und unterschiedlicher Werkstücke ermöglicht.

Diese Aufgabe wird durch die Merkmale der Ansprüche 1 und 3 gelöst. Die abhängigen Ansprüche haben vorteilhafte Ausgestaltungen und Weiterbildungen der Erfindung zum Gegenstand.

Als zentrales Element weist die Erfindung einen Handhabungs- und Bearbeitungsroboter auf, der zu bearbeitende Werkstücke nacheinander von einem Zuförderer zu einer ersten Bearbeitungsstation verbringt, an der der Handhabungs- und Bearbeitungsroboter eine erste Werkstückseite bearbeitet. Nach der Bearbeitung der ersten Werkstückseite verbringt der Handhabungs- und Bearbeitungsroboter das Werkstück zu einer Werkstückwendestation, wendet das Werkstück und verbringt es zu einer zweiten Bearbeitungsstation, wo der Handhabungs- und Bearbeitungsroboter eine der ersten Werkstückseite gegenüberliegende zweite Werkstückseite bearbeitet. Der Handhabungs- und Bearbeitungsroboter kann das Werkstück auf dem Weg von der ersten Bearbeitungsstation zur Werkstückwendestation, an oder in der Werkstückwendestation oder auf dem Weg von der Werkstückwendestation zur zweiten Bearbeitungsstation wenden. Möglich ist auch, dass das Werkstück in beziehungsweise von der Werkstückwendestation gewendet wird, jedoch nicht von dem Handhabungs- und Bearbeitungsroboter. Nach der Bearbeitung der zweiten Werkstückseite verbringt der Handhabungs- und Bearbeitungsroboter das Werkstück zu einem Abförderer.

Der Handhabungs- und Bearbeitungsroboter, der nachfolgend kurz auch als Roboter bezeichnet werden wird, ist stationär, das heißt ortsfest angeordnet. Bei einer Ausführung der Erfindung ist der Roboter ein sogenannter Industrieroboter, der um eine vertikale Achse drehbar ist und mindestens einen um eine insbesondere horizontale Schwenkachse schwenkbaren Roboterarm aufweist. Vorzugsweise weist der Handhabungs- und Bearbeitungsroboter zwei oder mehr Roboterarme auf, die schwenkbar miteinander verbunden sind. Möglich ist auch ein verfahrbarer beziehungsweise beweglicher Roboter. Beispielsweise kann der Handhabungs- und Bearbeitungsroboter auf Schienen verfahrbar sein um seinen Arbeits- und Greifbereich zu vergrößern (nicht dargestellt.

Der Zuförderer und der Abförderer sind stationäre, das heißt ortsfest angeordnete Linearförderer, die das Werkstück entlang einer geraden, gebogenen und/oder abgewinkelten, gedachten Bahn bewegen, wobei sich das Werkstück in Bezug auf den Förderer bewegt. Beispiele solcher Förderer sind Bandförderer und Rollenförderer, wobei andere Förderer nicht ausgeschlossen sind. Der Zuförderer fördert das Werkstück von beispielsweise einer Aufgabe, an der das Werkstück manuell oder automatisch auf, an oder in den Zuförderer verbracht wird, in einen Greifbereich des Handhabungs- und Bearbeitungsroboters und der Abförderer fördert das Werkstück aus dem Greifbereich des Handhabungs- und Bearbeitungsroboters zu einer Abnahme, wo das Werkstück manuell oder automatisch entnommen wird. Der "Greifbereich" des Handhabungs- und Bearbeitungsroboters ist ein Bereich, der für den Roboter zugänglich beziehungsweise erreichbar ist und in dem der Roboter das Werkstück greifen kann.

Die Bearbeitungsstationen weisen Werkstückaufnahmen auf, auf oder in die der Handhabungs- und Bearbeitungsroboter das Werkstück mit einer Werkstückseite legt, die einer Werkstückseite gegenüber liegt, die der Handhabungs- und Bearbeitungsroboter in der jeweiligen Bearbeitungsstation bearbeitet. Dabei bearbeitet der Handhabungs- und Bearbeitungsroboter in einer ersten Bearbeitungsstation eine erste Werkstückseite wobei das Werkstück mit der der ersten Werkstückseite gegenüberliegenden zweiten Werkstückseite auf oder in einer ersten Werkstückaufnahme der ersten Bearbeitungsstation liegt.

Zur Bearbeitung wird das Werkstück auf oder in der Werkstückaufnahme festgelegt, beispielsweise mechanisch beispielsweise mit Klemmbacken oder anderen mechanischen Spannmitteln gespannt, mit Unterdruck beispielsweise auf einem Vakuumtisch oder einem anderen Vakuum-Aufspannsystem oder - wenn es das Werkstück zulässt - mit einem Magnetspannsystem festgelegt. Die Aufzählung ist beispielhaft und nicht abschließend.

In einer zweiten Bearbeitungsstation bearbeitet der Handhabungs- und Bearbeitungsroboter die zweiten Werkstückseite wobei das Werkstück mit der ersten Werkstückseite auf oder in einer zweiten Werkstückaufnahme der zweiten Bearbeitungsstation liegt.

Der Handhabungs- und Bearbeitungsroboter bearbeitet die beiden Werkstückseiten insbesondere spanend mit geometrisch bestimmter/n oder geometrisch unbestimmter/n Schneide/n. Das bedeutet, das Werkstück wird insbesondere gefräst, gebohrt, gesägt und/oder geschliffen. Andere Bearbeitungen des Werkstücks schließt die Erfindung nicht aus.

Damit der Roboter als Handhabungs- und Bearbeitungsroboter das Werkstück bewegen und bearbeiten kann, sieht eine bevorzugte Ausgestaltung der Erfindung vor, dass der Roboter eine Werkzeugkupplung zu einem lösbaren, wahlweisen und wechselbaren Anbringen einer Greifeinrichtung zum Greifen des Werkstücks und eines Werkzeugs zum Bearbeiten des Werkstücks aufweist. Die Werkzeugkupplung ist eine Einrichtung zu einem lösbaren Befestigen wahlweise der Greifeinrichtung oder von wechselbaren Werkzeugen an dem Roboter, insbesondere an dem Roboterarm. Die Greifeinrichtung kann einen oder mehrere mechanische Greifer, einen Vakuumgreifer, der das Werkstück beispielsweise mit einem oder mehreren Saugnäpfen durch Unterdruck hält, oder einen magnetischen Greifer mit insbesondere einem oder mehreren Permanent- oder Elektromagneten aufweisen. Auch andere Greifeinrichtungen sind möglich.

Vorzugsweise weist der Handhabungs- und Bearbeitungsroboter einen Erstseitengreifer und einen Zweitseitengreifer auf. Dabei handelt es sich um Greifeinrichtungen, die an die erste und an die zweite Werkstückseite des Werkstücks angepasst sind und die beispielsweise an oder in der Werkstückwendestation zum automatischen Greifen für den Handhabungs- und Bearbeitungsroboter bereit gestellt sind.

Für die Werkzeuge weist die Werkzeugkupplung des Roboters insbesondere einen Drehantrieb auf, wobei beispielsweise ein Antriebsmotor für den Drehantrieb des Werkzeugs auch am Roboter angeordnet und eine Drehbewegung über die Werkzeugkupplung des Roboters auf das Werkzeug übertragen werden kann.

Damit der Handhabungs- und Bearbeitungsroboter das Werkstück greifen und bearbeiten kann, sind bei einer Ausgestaltung der Erfindung die Bearbeitungsstationen und die Werkstückwendestation um den Handhabungs- und Bearbeitungsroboter herum im Arbeits- und Greifbereich des Handhabungs- und Bearbeitungsroboters angeordnet. Der "Arbeitsbereich" des Handhabungs- und Bearbeitungsroboters ist ein Bereich, der für den Roboter zum Bearbeiten des Werkstücks mit einem Werkzeug zugänglich beziehungsweise erreichbar ist. Enden oder Stellen des Zuförderers und des Abförderers, an denen der Handhabungs- und Bearbeitungsroboter das Werkstück greift beziehungsweise ablegt, befinden sich ebenfalls im Greifbereich des Handhabungs- und Bearbeitungsroboters. Insbesondere sind die beiden Bearbeitungstationen an zwei gegenüberliegenden Stellen des Handhabungs- und Bearbeitungsroboters und die Werkstückwendestation und der Zu- und der Abförderer bezüglich des Handhabungs- und Bearbeitungsroboters quer zu den Bearbeitungsstationen einander ebenfalls gegenüber angeordnet.

Eine Weiterbildung der Erfindung sieht ein Werkzeugmagazin für das oder die Werkzeuge im Greifbereich des Roboters vor derart, dass der Roboter Werkzeuge im Werkzeugmagazin ablegen und aus dem Magazin greifen und benutzen kann. Der oder die Greifer beziehungsweise der Erstseitengreifer und der Zweitseitengreifer können ebenfalls in dem Werkzeugmagazin oder an oder in der Werkstückwendestation aufbewahrt oder abgelegt sein. Dadurch ist sowohl das Verbringen des Werkstücks zur und von den dem Zuförderer, den Bearbeitungsstationen, der Werkstückwendestation und dem Abförderer als auch die Bearbeitung des Werkstücks an oder in den Bearbeitungsstationen vorzugsweise mit verschiedenen Werkzeugen mittels des Handhabungs- und Bearbeitungsroboters möglich. Das ermöglicht eine Ausbildung der erfindungsgemäßen Fertigungsanlage mit einem einzigen Roboter.

Eine Ausgestaltung der Erfindung sieht vor, dass die Werkstückaufnahmen in den Bearbeitungsstationen dem Roboter zugeneigt sind. Die Werkstückaufnahmen halten die Werkstücke beziehungsweise die zu bearbeitenden Werkstückseiten in einem Winkel zwischen beispielsweise 30° und 60° oder von etwa 45° zu einer Vertikalen beziehungsweise Horizontalen in Richtung des Roboters geneigt. Werkstücke lassen sich dadurch besser mit dem Handhabungs- und Bearbeitungsroboter bearbeiten.

Möglich ist eine Ausführung der Erfindung mit einem Förderer, der sowohl als Zuförderer als auch als Abförderer verwendet wird. In bevorzugter Ausgestaltung weist die erfindungsgemäße Fertigungsanlage zwei Förderer auf, von denen einer den Zuförderer und der andere den Abförderer bildet, so dass jeder Förderer das oder auch die Werkstücke nur in einer Richtung fördert.

Zu einer platzsparenden Anordnung sind die beiden Förderer bei einer Ausführung der Erfindung übereinander angeordnet, wobei vorzugsweise ein unterer der beiden Förderer an einem oder an beiden Enden länger als ein oberer der beiden Förderer ist. Das heißt, der untere Förderer steht an einem oder an beiden Enden in einer Förderrichtung unter dem oberen Förderer vor. Dadurch ist das Werkstück auf oder an dem unteren Förderer sowohl bei der Aufgabe auf oder der Abnahme an einem dem Roboter fernen Ende als auch an einem dem Roboter nahen Ende für den Roboter gut zugänglich.

Eine Ausgestaltung der Erfindung sieht eine Aufnahme für das Werkstück auf oder an dem Zuförderer vor. Die Aufnahme ist eine an das Werkstück angepasste Vorrichtung, auf der das Werkstück positionsgenau in Bezug auf die Aufnahme anordenbar ist. Dadurch gelangt das Werkstück in einer vorgesehenen Lage in den Greifbereich des Roboters, wodurch eine autonome Handhabung des Werkstücks ohne Probleme möglich ist.

Der Zuförderer und/oder der Abförderer sind vorzugsweise tangential zum Roboter angeordnet und die Bearbeitungsstation beziehungsweise die Bearbeitungsstationen auf der gleichen Seite wie der Roboter neben dem Zuförderer und/oder neben dem Abförderer angeordnet. "Tangential" bedeutet insbesondere rechtwinklig zu einer Geraden, die die Drehachse des Roboters schneidet. Der Roboter ist beispielsweise zwischen den beiden Bearbeitungsstationen angeordnet, die bezüglich des Roboters einander gegenüber oder die beispielsweise in einem Dreieck mit dem Zuförderer und/oder dem Abförderer um den Roboter herum angeordnet sind, wobei sich der Roboter in dem Dreieck zwischen dem Zuförderer und/oder dem Abförderer und den beiden Bearbeitungsstationen befindet. Diese Ausgestaltung der Erfindung ermöglicht eine platzsparende Anordnung der Komponenten der Fertigungsanlage und ist an eine Kinemathek eines Industrieroboters, der um eine vertikale Achse drehbar ist und der beispielsweise zwei gelenkig verbundene, schwenkbare Roboterarme aufweist, angepasst.

Eine Ausgestaltung der Erfindung sieht eine Schutzumhausung des Handhabungs- und Bearbeitungsroboters und der Bearbeitungsstationen gegen einen Zutritt von Menschen in den Arbeits- und Greifbereich des Roboters vor. Der Zuförderer und der Abförderer führen durch die Schutzumhausung durch. Die Schutzumhausung kann beispielsweise ein Zaun, ein Käfig oder ein Gehäuse sein, das einen Zugang zu der oder den Bearbeitungsstationen und in den Arbeits- und Greifbereich des Roboters verhindert.

Eine Ausgestaltung der Erfindung sieht eine Schallschutzeinhausung der Bearbeitungsstationen vor. Insbesondere schließt die Schallschutzeinhausung die Bearbeitungsstation/en und den Roboter ein. Der Zuförderer und der Abförderer führen vorzugsweise durch die Schallschutzeinhausung durch, wobei an Durchführungsöffnungen schalldämpfende oder schallabsorbieren Maßnahmen vorgesehen sein können. Die Schallschutzeinhausung ist beispielsweise ein Gehäuse, das den Roboter und die Bearbeitungsstation/en umschließt und Geräusche bei der Bearbeitung des Werkstücks dämpft. Sie weist - wie die Schutzumhausung - vorzugsweise Öffnungen, eine Tür oder dergleichen auf, durch die der Roboter und die Bearbeitungsstationen für einen Menschen zugänglich sind. Die Schallschutzeinhausung kann zugleich die Schutzumhausung bilden.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs aufweisen, sind möglich.

Die Erfindung wird nachfolgend anhand eines in der Zeichnung dargestellten Ausführungsbeispiels näher erläutert. Es zeigen:

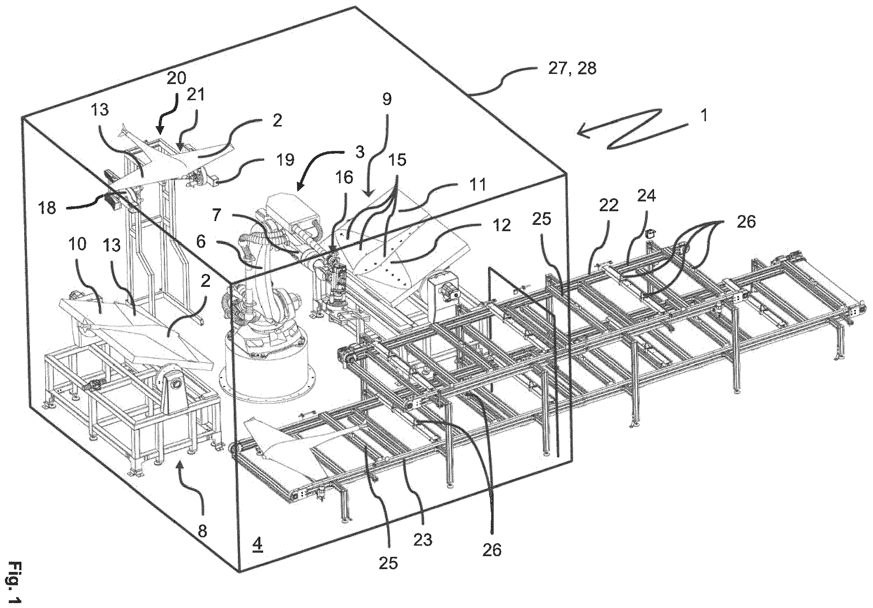

- Figur 1: eine Fertigungsanlage gemäß der Erfindung in einer perspektivischen Darstellung;

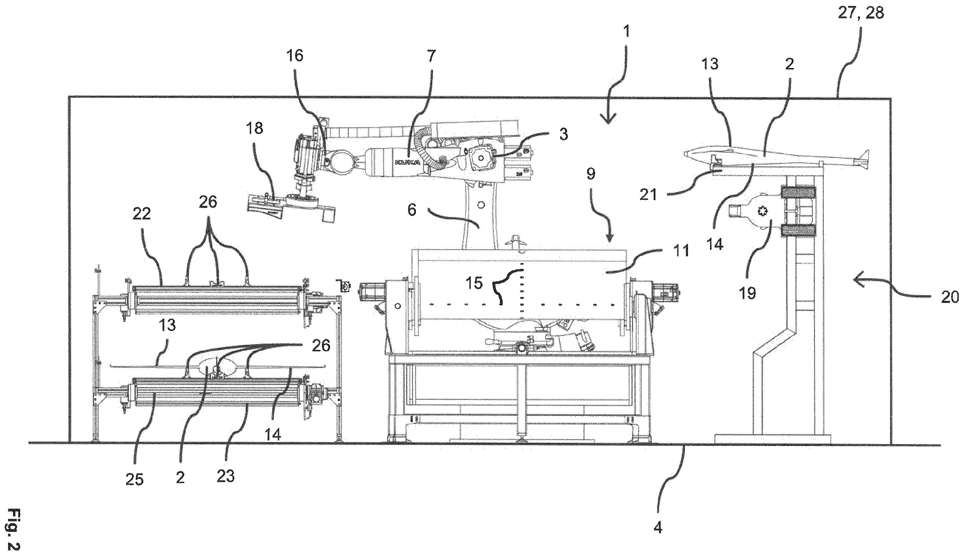

- Figur 2: eine Seitenansicht der Fertigungsanlage aus Figur 1;
- Figur 3: die Fertigungsanlage aus Figuren 1 und 2 in einer Seitenansicht mit im Vergleich zu Figur 1 um 90° gedrehten Blickrichtung; und

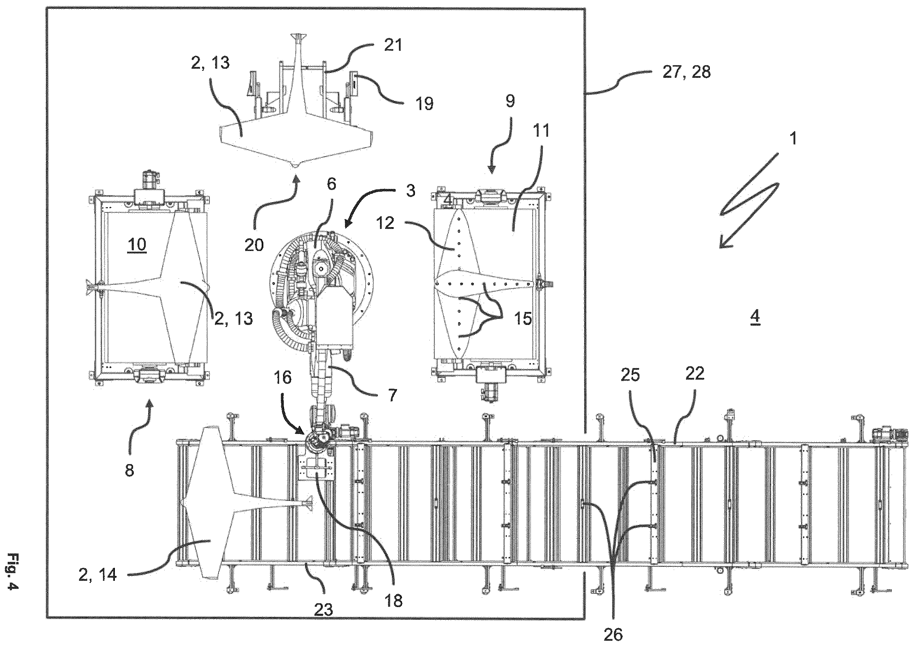

- Figur 4: eine Ansicht der Fertigungsanlage aus Figuren 1 bis 3 von oben.

Die in der Zeichnung dargestellte, erfindungsgemäße Fertigungsanlage 1 ist zu einer autonomen Bearbeitung eines Werkstücks 2 vorgesehen. Vorgesehen ist insbesondere ein spanendes Bearbeiten des Werkstücks 2 mit geometrisch bestimmter Schneide wie Fräsen und Bohren, eventuell auch ein Trennen wie Sägen, und ein spanendes Bearbeiten mit geometrisch unbestimmter Schneide wie Schleifen. Weitere Bearbeitungsmöglichkeiten der Fertigungsanlage 1 sind ein Umformen wie Biegen und ein Fügen wie Schweißen, Löten und Kleben.

Das Werkstück 2 ist im Ausführungsbeispiel ein einstückig aus Kunststoff geschäumter Rumpf mit Flügeln einer Drohne oder eines Wingcopters, also eines unbemannten Flugzeugs mit starren Flügeln. Bearbeitet werden können mit der erfindungsgemäßen Fertigungsanlage 1 grundsätzlich beliebige Werkstücke 2, auch Werkstücke die aus massivem Kunststoff, einem Verbundwerkstoff oder einem anderen Werkstoff als Kunststoff, beispielsweise aus Stahl oder einem anderen Metall bestehen. Es lassen sich komplexe Werkstücke 2 mit nahezu beliebiger Form bearbeiten, sofern zu bearbeitende Stellen des Werkstücks 2 zur Bearbeitung durch ein Werkzeug zugänglich sind. Es lassen sich - auch nacheinander in beliebiger Reihenfolge - unterschiedliche Werkstücke 2 autonom mit der erfindungsgemäßen Fertigungsanlage 1 bearbeiten.

Zur Bearbeitung des Werkstücks 2 weist die erfindungsgemäße Fertigungsanlage 1 einen Handhabungs- und Bearbeitungsroboter 3 auf, der nachfolgend auch kurz als Roboter 3 bezeichnet wird. Der Roboter 3 ist stationär auf einem Hallenboden 4 oder dergleichen Untergrund aufgestellt und um eine zum Hallenboden 4 senkrechte, bei horizontalem Hallenboden 4 also vertikale Achse drehbar. Im Ausführungsbeispiel weist der Roboter 3 einen ersten Roboterarm 6, der um eine erste Horizontalachse schwenkbar ist, und einen zweiten Roboterarm 7, der um eine zweite Horizontalachse schwenkbar an dem ersten Roboterarm 6 angeordnet ist, auf. Der Roboter 3 ist ein sogenannter Industrieroboter mit zwei nach Art eines Knies gelenkig verbundenen Roboterarmen 6, 7. Die Erfindung ist nicht auf den beschriebenen Roboter 3 beschränkt, andere Handhabungs- und Bearbeitungsroboter 3 sind möglich (nicht dargestellt).

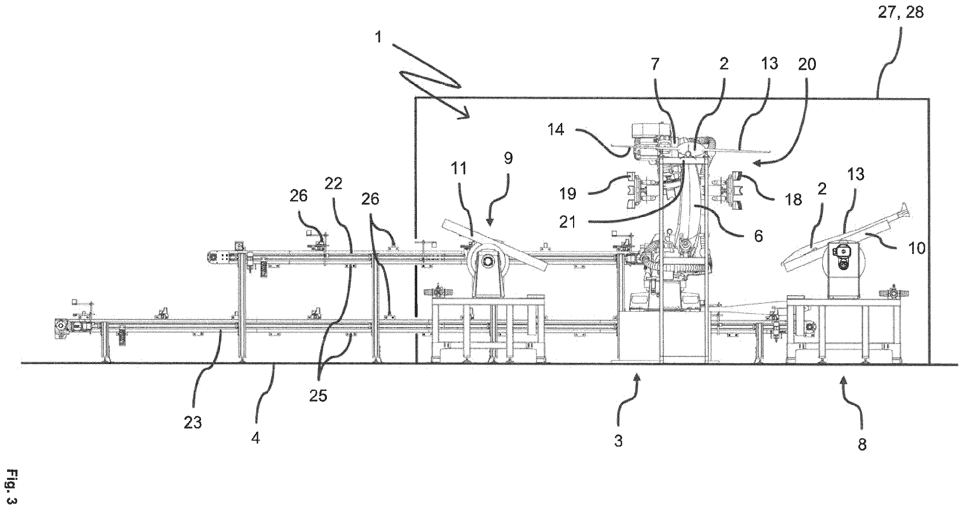

Der Handhabungs- und Bearbeitungsroboter 3 ist zwischen zwei einander bezüglich des Roboters 3 gegenüber angeordneten Bearbeitungsstationen 8, 9 angeordnet. Die Bearbeitungsstationen 8, 9 weisen Werkstückaufnahmen 10, 11 auf, auf die der Handhabungs- und Bearbeitungsroboter 3 das Werkstück 2 zur Bearbeitung legt und auf denen das Werkstück 2 während der Bearbeitung festgelegt wird. Die beiden Bearbeitungsstationen 8, 9 sind einander gegenüber auf dem Hallenboden 4 angeordnet mit dem Handhabungs- und Bearbeitungsroboter 3 zwischen den beiden Bearbeitungsstationen 8, 9. Im Ausführungsbeispiel sind die Werkstückaufnahmen 10, 11 mit einer Neigung von etwa 30° zum Hallenboden 4 dem zwischen ihnen angeordneten Roboter 3 zugewandt angeordnet (vgl. Figur 3).

Im Ausführungsbeispiel weisen die Werkstückaufnahmen 10, 11 Vertiefungen 12 auf, die an Formen einander gegenüberliegender Werkstückseiten 13, 14 des Werkstücks 2 angepasst sind derart, dass das Werkstück 2 mit jeweils einer seiner gegenüberliegenden Werkstückseiten 13, 14 in die Vertiefungen 12 der Werkstückaufnahmen 10, 11 einlegbar ist. Das Werkstück 2 hat auf diese Weise einen gewissen Halt durch Formschluss in den Vertiefungen 12 der Werkstückaufnahmen 10, 11. In den Vertiefungen 12 weisen die Werkstückaufnahmen 10, 11 Saugöffnungen 15 einer Vakuumabsaugung auf, wodurch das Werkstück 2 zur Bearbeitung in den Vertiefungen 12 der Werkstückaufnahmen 10, 11 in den Bearbeitungsstationen 8, 9 festlegbar ist. Die Werkstückaufnahmen 10, 11 können als Vakuumtische aufgefasst werden, auf denen das Werkstück 2 mit Vakuum beziehungsweise Unterdruck festlegbar ist. Grundsätzlich sind auch andere Aufspannungen des Werkstücks beispielsweise mechanisch mit Spannbacken oder dergleichen Spannmitteln oder gegebenenfalls magnetisch möglich (nicht dargestellt).

Die Werkstückaufnahmen 10, 11 der Bearbeitungsstationen 8, 9 befinden sich in einem Arbeits- und Greifbereich des Roboters 3, das heißt die Werkstückaufnahmen 10, 11 sind so in Bezug zum Roboter 3 angeordnet, dass der Roboter 3 die Werkstücke 2 sowohl zum Festlegen auf die Werkstückaufnahmen 10, 11 verbringen, im Ausführungsbeispiel also in die Vertiefungen 12 der Werkstückaufnahmen 10, 11 legen, als auch dort mit einem Werkzeug bearbeiten kann.

Im Ausführungsbeispiel weist der zweite Roboterarm 7 an einem dem ersten Roboterarm 6 fernen Ende eine Werkzeugkupplung 16 zu einem lösbaren und wechselbaren Anbringen wahlweise einer Greifeinrichtung oder eines Werkzeugs zum Bearbeiten des Werkstücks 2 auf. Als Greifeinrichtungen weist der Handhabungs- und Bearbeitungsroboter 3 einen Erstseitengreifer 18 zum Greifen einer ersten Werkstückseite 13 und einen Zweitseitengreifer 19 zum Greifen einer der ersten Werkstückseite 13 gegenüberliegenden zweiten Werkstückseite 14 des Werkstücks 2 auf. Der Erstseitengreifer 18 und der Zweitseitengreifer 19 sind im Ausführungsbeispiel an die Formen der ersten und der zweiten Werkstückseite 13, 14 angepasste Sauggreifer, die das Werkstück 2 mit Vakuum beziehungsweise Unterdruck an der jeweiligen Werkstückseite 13, 14 greifen. Andere, beispielsweise mechanische Greifer oder Magnetgreifer sind möglich (nicht dargestellt).

Der Handhabungs- und Bearbeitungsroboter 3 weist eine - im Ausführungsbeispiel siebte - Roboterachse für die Werkzeugkupplung 16 am Ende des zweiten Roboterarms 7 auf, durch die Werkzeugkupplung 16 mit den Werkzeugen und insbesondere der Erstseitengreifer 18 und der Zweitseitengreifer 19 um mindestens 180°, vorzugsweise um 360° oder unbegrenzt gedreht werden können. Eine Drehdurchführung für das Vakuum beziehungsweise den Unterdruck ermöglicht die unbegrenzte Drehung des Erstseitengreifers 18 und des Zweitseitengreifers 19.

An einer Stelle im Greifbereich des Roboters 3 weist die erfindungsgemäße Fertigungsanlage 1 ein nicht dargestelltes Werkzeugmagazin für verschiedene Werkzeuge wie Fräser, Bohrer, eine (Kreis-) Säge, Schleifscheiben und so weiter auf.

In der Zeichnung sind keine Werkzeuge sonder der Handhabungs- und Bearbeitungsroboter 3 immer mit dem Erstseitengreifer 18 dargestellt, wobei der Erstseitengreifer 18 gegen den Zweitseitengreifer 19 oder gegen wahlweise ein beliebiges der nicht dargestellten Werkzeuge wechselbar ist.

Der Erstseitengreifer 18 und der Zweitseitengreifer 19 sind ebenfalls im Greifbereich des Handhabungs- und Bearbeitungsroboters 3 an einer Werkstückwendestation 20 abgelegt. Die Werkstückwendestation 20 befindet sich an einer bezüglich der beiden Bearbeitungsstationen 8, 9 um 90° versetzten Stelle neben dem und im Greifbereich des Handhabungs- und Bearbeitungsroboters 3. Sie weist eine Werkstückablage 21 für das Werkstück 2 auf.

Auf einer der Werkstückwendestation 20 gegenüberliegenden Seite des Handhabungs- und Bearbeitungsroboters 3 sind ein Zuförderer 22 und einen Abförderer 23 angeordnet, derart, dass sich der Handhabungs- und Bearbeitungsroboter 3 zwischen den beiden Bearbeitungsstationen 8, 9, der Werkstückwendestation 20 und dem Zuförderer 22 und dem Abförderer 23 befindet. Der Zuförderer 22 und der Abförderer 23 sind im Ausführungsbeispiel stationäre, lineare Förderanlagen, wobei mit dem Zuförderer 22 die Werkstücke 2 von außerhalb des Greifbereichs des Roboters 3 in den Greifbereich des Roboters 3 und mit dem Abförderer 23 die Werkstücke 2 nach ihrer Bearbeitung wieder aus dem Greifbereich des Roboters 3 heraus bewegt werden.

Der Zuförderer 22 ist im Ausführungsbeispiel ein Kettenförderer mit zwei parallel in Abstand nebeneinander angeordneten, umlaufenden Gelenkketten als Förderketten 24, an denen Traversen 25 angeordnet sind, auf denen Aufnahmen 26 für die Werkstücke 2 angeordnet sind. Die Aufnahmen 26 sind an die Form der Werkstücke 2 angepasste Vorrichtungen, auf die die Werkstücke 2 positionsgenau auflegbar sind, so dass die Werkstücke 2, wenn sie in den Greifbereich des Roboters 3 gelangen, eine definierte Lage aufweisen, wodurch sie einfach autonom vom Roboter 3 an einer ersten Werkstückseite 13 mit dem Erstseitengreifer 18 gegriffen werden können. Der Roboter 3 hebt ein Werkstück 2 von der Aufnahme 26 des Zuförderers 22 und legt es mit der zweiten Werkstückseite 14 nach unten in die Vertiefung 12 der ersten Werkstückaufnahme 10 der ersten Bearbeitungsstation 8. Dort wird das Werkstück 2 zur Bearbeitung mit Vakuum beziehungsweise Unterdruck festgelegt.

Anschließend legt der Handhabungs- und Bearbeitungsroboter 3 den Erstseitengreifer 18 an der Werkstückwendestation 20 ab, greift ein Werkzeug aus dem nicht gezeichneten Werkzeugmagazin und bearbeitet damit die ihm zugeneigte erste Werkstückseite 13 des Werkstücks 2. Durch Wechsel der Werkzeugs 17 sind unterschiedliche Bearbeitungen der ersten Werkstückseite 13 möglich.

Nachdem die erste Werkstückseite 13 vollständig bearbeitet ist, legt der Handhabungs- und Bearbeitungsroboter 3 das Werkzeug wieder im Werkzeugmagazin ab, greift den Erstseitengreifer 18 in der Werkstückwendestation 20, greift damit das Werkstück 2 an der ersten Werkstückseite 13 und verbringt es von der ersten Bearbeitungsstation 8 zur Werkstückwendestation 20, wo er das Werkstück 2 auf die Werkstückablage 21 legt. Anschließend wechselt der Handhabungs- und Bearbeitungsroboter 3 den Erstseitengreifer 18 gegen den Zweitseitengreifer 19, mit dem er das Werkstück 2 von unten an der zweiten Werkstückseite 14 greift und von der Werkstückwendestation 20 zur zweiten Bearbeitungsstation 9 verbringt, wobei der Handhabungs- und Bearbeitungsroboter 3 das Werkstück 2 wendet, das heißt die bearbeitete erste Werkstückseite 13 nach unten und die zweite Werkstückseite 14 nach oben dreht. In der zweiten Bearbeitungsstation 9 legt der Handhabungs- und Bearbeitungsroboter 3 das Werkstück 2 mit der ersten Werkstückseite 13 in die Vertiefung 12 der zweiten Werkstückaufnahme 11.

Die Bearbeitung der zweiten Werkstückseite 14 in der zweiten Bearbeitungsstation 9 erfolgt wie oben beschrieben die Bearbeitung der ersten Werkstückseite 13 in der ersten Bearbeitungsstation 8.

Nach vollständiger Bearbeitung auch der zweiten Werkstückseite 14 wechselt der Handhabungs- und Bearbeitungsroboter 3 das Werkzeug wieder gegen den Zweitseitengreifer 19, mit dem er das Werkstück 3 an der zweiten Werkstückseite 14 greift und noch einmal auf die _Werkstückablage 21 in der Werkstückwendestation 20 legt. Erneut wechselt der Handhabungs- und Bearbeitungsroboter 3 den Zweitseitengreifer 19 gegen den Erstseitengreifer 18, greift damit das Werkstück 2 an der ersten Werkstückseite 13 legt beziehungsweise verbringt das Werkstück 2 mit der zweiten Werkstückseite 14 nach unten auf den beziehungsweise zum Abförderer 23, der im Ausführungsbeispiel wie der Zuförderer 22 ausgebildet ist. Beim Verbringen des Werkstücks 2 von der zweiten Bearbeitungsstation 9 zur Werkstückwendestation 20 oder beim Verbringen des Werkstücks 2 von der Werkstückwendestation 20 zum Abförderer 23 wendet der Handhabungs- und Bearbeitungsroboter 3 das Werkstück 2 mit der ersten Werkstückseite 13 nach oben und der zweiten Werkstückseite 1 nach unten. Auf dem Abförderer 23 hat das Werkstück 2 dadurch wieder die Lage, die es auf dem Zuförderer 22 hatte.

Im Ausführungsbeispiel sind die beiden Förderer 22, 23 übereinander angeordnet, was allerdings nicht zwingend für die Erfindung ist. Es befindet sich im Ausführungsbeispiel der Zuförderer 22 über dem Abförderer 23 und der Abförderer 23 beziehungsweise der unten angeordnete Förderer 23 ist an beiden Enden länger als der Zuförderer 22 beziehungsweise der oben angeordnete Förderer 22, so dass der Abförderer 23 beziehungsweise der unten angeordnete Förderer 23 an seinen Enden gut zum Auflegen und Abnehmen der Werkstücke 2 zugänglich ist.

Die Erfindung ist nicht auf den beschriebenen Zuförderer 22 oder den beschriebenen Abförderer 23 beschränkt, sondern die erfindungsgemäße Fertigungsanlage 1 kann einen grundsätzlich beliebig ausgeführten Zuförderer 22 und Abförderer 23 aufweisen (nicht dargestellt).

Die erfindungsgemäße Fertigungsanlage 1 weist ein schallisolierendes, schalldämpfendes beziehungsweise schalldämmendes Gehäuse oder Kabine als Schallschutzeinhausung 27 auf, die die Bearbeitungsstationen 8, 9, den Handhabungs- und Bearbeitungsroboter 3 und die Werkstückwendestation 20 vollständig und den Zuförderer 22 und den Abförderer 23 teilweise umschließt. In der Zeichnung ist die Schallschutzeinhausung 27 vereinfacht als durchsichtiger Quader gezeichnet. Der Zuförderer 22 und der Abförderer 23 sind durch eine Öffnung der Schallschutzeinhausung 27 nach außen geführt. Die Schallschutzeinhausung 27 verringert Schallemissionen der Bearbeitung des Werkstücks 2 an oder in den Bearbeitungsstationen 8, 9. Zugleich bildet die Schallschutzeinhausung 27 auch eine Schutzumhausung 28 gegen einen Zutritt von Menschen in den Arbeits- und Greifbereich des Roboters 3 zur Unfallverhütung.

Abhängig von einer Größe der Fertigungsanlage 1 weist die Schallschutzeinhausung 27 nicht dargestellte Öffnungen oder Türen auf, durch die der Roboter 3 und die Bearbeitungsstationen 8, 9 zur Wartung und Reparatur zugänglich sind. Die Öffnungen und Tür sind während eines Betriebs der Fertigungsanlage 1 geschlossen, ein Öffnen einer der Öffnungen oder Tür setzt die Fertigungsanlage 1 aus Sicherheitsgründen automatisch außer Betrieb.

Die Schallschutzeinhausung 27 beziehungsweise Schutzumhausung 28 ist im Ausführungsbeispiel in der Brandschutzklasse A1 ausgeführt, um ein Übergreifen eines Brandes in der Schallschutzeinhausung 27 beziehungsweise Schutzumhausung 28 nach außen zu verhindern. Außer dem Schall- und Brandschutz bietet die Schallschutzeinhausung 27 beziehungsweise Schutzumhausung 28 durch ihre Ausführung Schutz vor in ihrem Inneren umherfliegenden Teilen unter anderem durch Ausführung eventueller Fenster mit einer Doppelverglasung ESG 6.

## Patentansprüche

1. Verfahren zur Bearbeitung eines Werkstücks (2) an zwei gegenüberliegenden Werkstückseiten (13, 14), mit einem stationären Handhabungs- und Bearbeitungsroboter (3), der das Werkstück (2) an einer ersten Werkstückseite (13) greift, von einem Zuförderer (23) nimmt und mit einer der ersten Werkstückseite (13) gegenüberliegenden zweiten Werkstückseite (14) auf eine erste Werkstückaufnahme (10) einer ersten Bearbeitungsstation (8) legt, dass der Handhabungs- und Bearbeitungsroboter (3) die erste Werkstückseite (13) des mit der zweiten Werkstückseite (14) auf der ersten Werkstückaufnahme (10) liegenden Werkstücks (2) bearbeitet, dass der Handhabungs- und Bearbeitungsroboter (3) danach das Werkstück (2) an der bearbeiteten ersten Werkstückseite (13) greift und auf eine Werkstückablage (21) einer Werkstückwendestation (20) legt, dass danach der Handhabungs- und Bearbeitungsroboter (3) das Werkstück (2) an der zweiten Werkstückseite (14) greift, wendet und mit der ersten Werkstückseite (13) auf eine zweite Werkstückaufnahme (11) einer zweiten Bearbeitungsstation (9) legt, dass der Handhabungs- und Bearbeitungsroboter (3) die zweite Werkstückseite (14) des mit der ersten Werkstückseite (13) auf der zweiten Werkstückaufnahme (11) liegenden Werkstücks (2) bearbeitet und dass danach der Handhabungs- und Bearbeitungsroboter (3) das Werkstück (2) an der zweiten Werkstückseite (14) greift und zu einem Abförderer (23) verbringt.

2. Verfahren nach Anspruch 1, **dadurch gekennzeichnet, dass** der Handhabungs- und Bearbeitungsroboter (3) das Werkstück (2) mit einem Erstseitengreifer (18) an der ersten Werkstückseite (13) und mit einem Zweitseitengreifer (19) an der zweiten Werkstückseite (14) greift, dass der Handhabungs- und Bearbeitungsroboter (3) das Werkstück (2) mit einem oder mit verschiedenen Werkzeugen bearbeitet und dass der Handhabungs- und Bearbeitungsroboter (3) den Erstseitengreifer (18), den Zweitseitengreifer (19) und das oder die Werkzeuge wechselt.

3. Fertigungsanlage zu einer autonomen Bearbeitung eines Werkstücks (2), mit einem stationären Handhabungs- und Bearbeitungsroboter (3), mit einem stationären, linearen Zuförderer (22), mit dem das Werkstück (2) in einen Greifbereich des Handhabungs- und Bearbeitungsroboters (3) förderbar ist, mit einem stationären, linearen Abförderer (23), mit dem das Werkstück (2) aus dem Greifbereich des Handhabungs- und Bearbeitungsroboters (3) förderbar ist, und mit einer ersten Bearbeitungsstation (8) im Greifbereich des Handhabungs- und Bearbeitungsroboters (3) zur Bearbeitung einer ersten Werkstückseite (13) des Werkstücks (2) mit dem Handhabungs- und Bearbeitungsroboter (3), wobei die erste Bearbeitungsstation (8) eine erste Werkstückaufnahme (10) für eine der ersten Werkstückseite (13) des Werkstücks (2) gegenüberliegende zweite Werkstückseite (14), mit einer zweiten Bearbeitungsstation (9) im Greifbereich des Handhabungs- und Bearbeitungsroboters (3) zur Bearbeitung der zweiten Werkstückseite (14) mit dem Handhabungs- und Bearbeitungsroboter (3), wobei die zweite Bearbeitungsstation (9) eine zweite Werkstückaufnahme (11) für die erste Werkstückseite (13) des Werkstücks (2) aufweist, und mit einer Werkstückwendestation (20) im Greifbereich des Handhabungs- und Bearbeitungsroboters (3) mit einer Werkstückablage (21) zum Ablegen des Werkstücks (2) zwischen der Bearbeitung des Werkstücks (2) in der ersten Bearbeitungsstation (8) und der zweiten Bearbeitungsstation (9).

4. Fertigungsanlage nach Anspruch 3, **dadurch gekennzeichnet, dass** der Handhabungs- und Bearbeitungsroboter (3) um eine vertikale Achse drehbar ist und mindestens einen um eine Schwenkachse schwenkbaren Roboterarm (6, 7) aufweist, dass der Handhabungs- und Bearbeitungsroboter (3) zwischen den beiden Bearbeitungsstationen (8, 9), der Werkstückwendestation (20), dem Zuförderer (22) und dem Abförderer (23) angeordnet ist, dass die beiden Bearbeitungsstationen (8, 9) einander bezüglich des Handhabungs- und Bearbeitungsroboters (3) gegenüber angeordnet sind und dass die Werkstückwendestation (20) dem Zuförderer (22) und dem Abförderer (23) bezüglich des Handhabungs- und Bearbeitungsroboter (3) gegenüber angeordnet ist.

5. Fertigungsanlage nach Anspruch 3 oder 4, **dadurch gekennzeichnet, dass** der Roboter (3) eine Werkzeugkupplung (16) zu einem lösbaren Anbringen eines Erstseitengreifers (18) zum Greifen der ersten Werkstückseite (13), eine Zweitseitengreifers (19) zum Greifen der zweiten Werkstückseite (14) und eines oder verschiedener Werkzeug zum Bearbeiten des Werkstücks (2) aufweist.

6. Fertigungsanlage nach einem oder mehreren der Ansprüche 3 bis 5, **dadurch gekennzeichnet, dass** die erste und die zweite Werkstückaufnahme (10, 11) dem Handhabungs- und Bearbeitungsroboter (3) zugewandt geneigt angeordnet sind.

7. Fertigungsanlage nach nach einem oder mehreren der Ansprüche 3 bis 6, **dadurch gekennzeichnet, dass** der Zuförderer (22) und der Abförderer (23) übereinander angeordnet sind.

8. Fertigungsanlage nach Anspruch 7, **dadurch gekennzeichnet, dass** ein unterer der beiden Förderer (23) an einem dem Roboter (3) nahen und/oder an einem dem Roboter (3) fernen Ende länger ist.

9. Fertigungsanlage nach einem oder mehreren der Ansprüche 3 bis 8, **dadurch gekennzeichnet, dass** der Zuförderer (22) eine Aufnahme (26) für das Werkstück (2) aufweist, an der das Werkstück (2) zum Fördern in den Greifbereich des Roboters (3) positionsgenau in Bezug auf die Aufnahme (26) anordenbar ist.

10. Fertigungsanlage nach einem oder mehreren der Ansprüche 3 bis 9, **dadurch gekennzeichnet, dass** die Fertigungsanlage (1) eine Schutzumhausung (28) gegen einen Zutritt von Menschen in den Greifbereich des Roboters (3) aufweist.

11. Fertigungsanlage nach einem oder mehreren der Ansprüche 3 bis 10, **dadurch gekennzeichnet, dass** die Fertigungsanlage (1) eine Schalschutzeinhausung (27) des Handhabungs- und Bearbeitungsroboters (3), der Bearbeitungsstationen (8, 9), der Werkstückwendestation (20) und des Zuförderers (22) und des Abförderers (23) aufweist.
